# FASCICULE DE BREVET EUROPEEN

(11) **EP 2 009 571 B1**
(45) Date de publication et mention de la délivrance du brevet: **13.05.2020**
(21) Numéro de dépôt: 08158334.6
(22) Date de dépôt: 16.06.2008
(51) Int. Cl.: G06F 21/34, G06F 21/41

(54) **SYSTÈME ET PROCÉDÉ DE SÉCURISATION UTILISANT UN DISPOSITIF DE SÉCURITÉ**
SICHERUNGSSYSTEM UND -VERFAHREN MIT HILFE EINER SICHERHEITSVORRICHTUNG
SECURING SYSTEM AND METHOD USING A SECURITY DEVICE

(30) Priorité: 22.06.2007 FR 0704492
(43) Date de publication de la demande: 31.12.2008
(73) Titulaire: Airbus CyberSecurity SAS, 78990 Elancourt (FR)
(72) Inventeur: Gonzalez, Xavier, 78390, BOIS D'ARCY (FR); Fleutot, Yann, 78180, MONTIGNY LE BRETONNEUX (FR); Moquereau, Cyril, 93360, NEUILLY-PLAISANCE (FR)
(74) Mandataire: Cabinet Camus Lebkiri

(56) Documents cités:
- US-A1- 2001 043 702
- US-A1- 2006 031 683

## Description

La présente invention concerne un système et un procédé de sécurisation utilisant un dispositif de sécurité. Elle concerne également un produit programme d'ordinateur pour mettre en œuvre le procédé.

Pour augmenter la sécurité des systèmes d'information, l'authentification des utilisateurs par le couple identifiant / mot de passe, est de plus en plus souvent remplacé par l'utilisation d'un dispositif de sécurité comportant des moyens de cryptographie tel qu'une carte à puce où une clé USB contenant des certificats cryptographiques.

Une application utilisant un tel dispositif déclenche systématiquement une étape préalable d'authentification permettant de vérifier que l'utilisateur actuel est l'utilisateur légitime du dispositif de sécurité. Cette étape d'authentification est classiquement réalisée en demandant au moins un secret à l'utilisateur actuel, secret connu seulement de l'utilisateur légitime et du dispositif de sécurité. Ce secret est un mot de passe ou un code d'identification connu dans la littérature sous le nom de « Personal Identification Number » ou « PIN Code ».

Ainsi, si plusieurs applications utilisent le dispositif de sécurité, l'utilisateur est amené à s'authentifier spécifiquement pour chaque application, multipliant ainsi les saisies du secret et donc le risque d'interception de celui-ci par un tiers.

Dans le cadre des applications dont l'accès est contrôlé par un couple identifiant / mot de passe, il existe des procédés et systèmes de mutualisation des mots de passe appelés génériquement « Single Sign-On » ou SSO (Identification unique).

Classiquement, il existe deux types de fonctionnement de SSO.

Le premier type consiste en une fonctionnalité centralisée qui intercepte au niveau du ou des serveurs les requêtes d'authentification et les transforme pour éviter à l'utilisateur de s'authentifier plusieurs fois.

Le second type consiste en une fonctionnalité qui s'exécute sur le poste de l'utilisateur et qui remplit les champs d'identifiant / mot de passe à la place de l'utilisateur. Ainsi, chaque apparition à l'écran d'une fenêtre de demande d'identifiant / mot de passe est détectée et les champs sont remplis avant que l'utilisateur ait pu apercevoir la fenêtre.

A titre d'exemple, le produit CA eTrust Siteminder de la société Computer Associate est du premier type alors que le produit CA eTrust SSO de la même société est du second type.

On comprend donc que, pour l'utilisateur, l'utilisation d'un dispositif de sécurité apparaît comme un recul, sur le plan de l'ergonomie, par rapport aux solutions SSO.

Il serait donc particulièrement avantageux de développer un système et un procédé d'authentification qui combine l'avantage d'une identification unique amenée par le SSO avec l'augmentation de la sécurité apportée par le dispositif de sécurité.

Le document US 2006/031683 A1 enseigne un module de présentation présentant à l'utilisateur des applications ou des données ou des réseaux que voit l'utilisateur depuis sa station de travail. Ce document enseigne ainsi une authentification d'un utilisateur depuis sa station de travail puis une présentation d'applications autorisées par le module de présentation. Une requête est émise par une application uniquement si cette application est visible au préalable par l'utilisateur.

Le document US 2001/0043702 A1 enseigne une clé d'authentification permettant l'accès à des documents, cette clé d'authentification étant elle-même sécurisée par un code PIN. Ainsi un double mécanisme de protection comprend d'une part une clé d'authentification auprès d'application et d'autre part une sécurisation de cette clé par un code PIN entré par le porteur de la clé. La clé de sécurité permet une authentification par un challenge et une vérification d'un code pin stocké en mémoire.

Selon un aspect de l'invention, un système de sécurisation d'au moins une application de traitement de données utilisant un dispositif de sécurité pour identifier un utilisateur comporte :
- des premiers moyens d'interface avec un dispositif de sécurité ;
- des deuxièmes moyens d'interface avec l'utilisateur ;
- des troisièmes moyens d'interface avec l'application adaptés pour intercepter toute requête d'utilisation dudit dispositif de sécurité en provenance de ladite application à destination dudit dispositif de sécurité ;
- des moyens d'authentification connectés aux premiers et deuxièmes moyens d'interface, adaptés pour authentifier l'utilisateur comme utilisateur légitime du dispositif de sécurité par demande d'au moins un secret ;
- des moyens de stockage du résultat de l'authentification ;
- des moyens de validation connectés aux moyens de stockage et aux premiers et troisièmes moyens d'interface, adaptés pour:
   --autoriser toute requête en provenance de l'application, à destination dudit dispositif de sécurité si et seulement si, l'utilisateur est authentifié ; 1
   --transmettre directement une information à l'application de façon à ce qu'il ne soit pas demandé à l'utilisateur d'entrer son secret une nouvelle fois si l'utilisateur est déjà authentifié et qu'une requête reçue est une requête d'authentification de l'utilisateur,
   --déclencher les moyens d'authentification si l'utilisateur n'est pas authentifié. 1

Selon d'autres caractéristiques et modes de réalisation particulière :
- les moyens de validation sont adaptés pour déclencher les moyens d'authentification si l'utilisateur n'est pas authentifié ;
- le système comporte en outre des moyens de vérification de l'appartenance de ladite application à une liste d'applications autorisées préalablement stockée dans les moyens de stockage ;
- si l'application n'appartient pas à la liste d'applications autorisées, les deuxièmes moyens d'interface sont adaptés pour demander l'accord de l'utilisateur pour que les moyens de validation autorisent l'application à communiquer avec ledit dispositif de sécurité ;
- les moyens d'authentification sont adaptés pour demander une authentification à l'utilisateur selon une périodicité prédéterminée ;
- le système comporte en outre, des moyens de surveillance d'accès au dispositif de sécurité, adaptés pour détecter et bloquer toute tentative d'accès au dispositif de sécurité par une application n'utilisant pas les premiers et/ou les troisièmes moyens d'interface.

Selon un autre aspect de l'invention, un procédé de sécurisation d'au moins une application utilisant un dispositif de sécurité pour identifier un utilisateur, ledit dispositif de sécurité authentifiant l'utilisateur au moyen d'au moins un secret, ledit procédé de sécurisation étant adapté pour recevoir et traiter des requêtes d'utilisation dudit dispositif de sécurité en provenance de ladite application comporte les étapes de :
- interception d'une requête d'utilisation adressée par ladite application audit dispositif de sécurité,
- vérification que l'utilisateur a été authentifié par le dispositif de sécurité,
- si l'utilisateur n'est pas authentifié, rejet de la requête,
- si l'utilisateur a été authentifié, transmission de la requête audit dispositif de sécurité et, si la requête reçue est une requête d'authentification de l'utilisateur, transmission directement d'une information à l'application de façon à ce qu'il ne soit pas demandé à l'utilisateur d'entrer son secret une nouvelle fois.

Selon des modes de réalisation particuliers de ce procédé :
- suite à l'interception de la requête de l'application, une étape de vérification de l'appartenance de ladite application à une liste d'applications autorisées, est effectuée, de sorte que seules les applications autorisées ont accès au dispositif de sécurité,
- si l'application n'appartient pas à la liste d'applications autorisées, il comporte une étape d'autorisation de ladite application par ledit utilisateur.

Selon un autre aspect de l'invention, un produit programme d'ordinateur comprend des instructions de code de programme pour l'exécution des étapes du procédé précédent lorsque ledit programme est exécuté sur un ordinateur.

L'invention sera mieux comprise à la lecture de la description qui suit, faite uniquement à titre d'exemple et en référence aux figures en annexe dans lesquelles :
- la figure 1 est une vue schématique d'un système d'authentification selon un mode de réalisation de l'invention ;
- la figure 2 est un ordinogramme d'un procédé d'authentification selon un mode de réalisation de l'invention ;
- la figure 3 est un ordinogramme détaillé d'un procédé d'accès d'une application à un dispositif de sécurité selon un mode de réalisation de l'invention ;
- la figure 4 est une vue schématique d'une architecture logicielle selon un mode de réalisation de l'invention ;
- la figure 5 est une vue schématique du module « serveur » de l'architecture de la figure 4 ;
- la figure 6 est une vue schématique du module « client » de l'architecture de la figure 4 ; et
- la figure 7 est une vue schématique du module « gestion » de l'architecture de la figure 4.

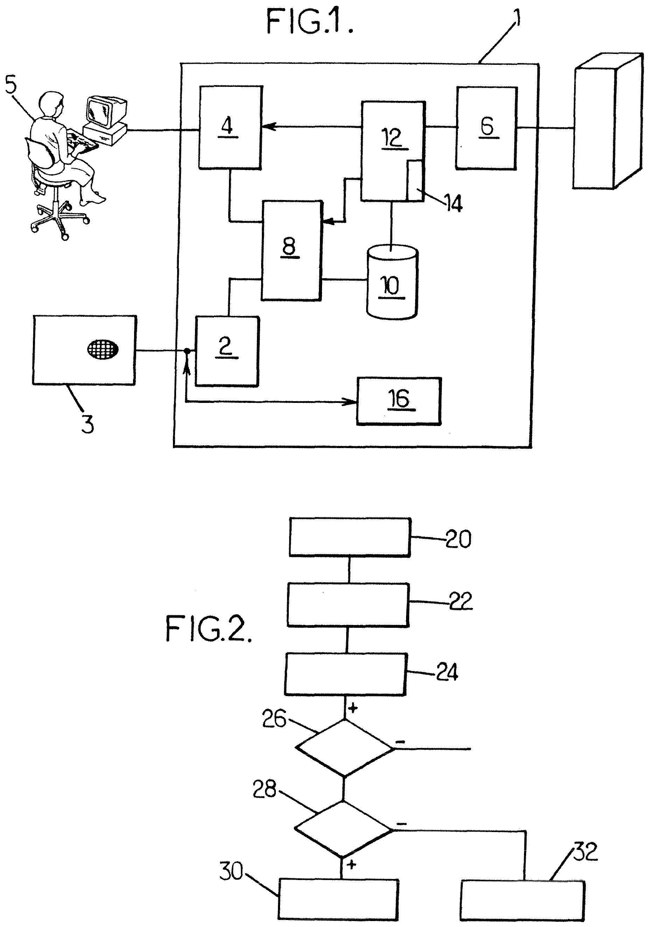

En référence à la figure 1, un système 1 de sécurisation comporte des premiers moyens d'interface 2 avec un dispositif 3 de sécurité tel que, par exemple, une carte à puce ou une clé USB adaptée pour traiter des fonctions cryptographiques.

Le système 1 de sécurisation comporte également des deuxièmes moyens 4 d'interface avec un utilisateur 5.

Selon le découpage architectural choisi, ces deux interfaces sont des composants purement logiciels tels que des bibliothèques de fonction et la connexion matérielle au dispositif de sécurité ainsi que l'interface homme / machine sont alors traitées par la station de travail sous-jacente. Ils peuvent également intégrer tout ou partie du matériel d'interface. Par exemple, pour des raisons de sécurité, le système de sécurisation est intégrable dans un périphérique d'ordinateur comportant un lecteur de carte à puce.

Ce système 1 de sécurisation comporte des troisièmes moyens 6 d'interface avec une ou plusieurs applications.

Ces troisièmes moyens 6 d'interface se présentent, par exemple, sous forme d'une interface de programmation.

Le système 1 de sécurisation comporte également des moyens 8 d'authentification. Les moyens 8 d'authentification sont connectés aux premiers et seconds moyens 2, 4 d'interface de façon à pouvoir authentifier l'utilisateur 5.

Ces moyens 8 d'authentification stockent le résultat de l'authentification dans des moyens 10 de stockage. Ces moyens 10 de stockage sont réalisés, par exemple, sous forme d'un champ adressable de mémoire vive ou d'un fichier permanent sur disque dur.

Le système 1 de sécurisation comporte des moyens 12 de validation connectés aux moyens 10 de stockage et aux troisièmes moyens 6 d'interface. Les moyens 12 de validation comportent en particulier des moyens 14 de vérification que l'application fait partie d'une liste d'applications autorisées.

De plus, le système 1 de sécurisation comporte des moyens 16 de surveillance de la connexion du dispositif 3 de sécurité pour surveiller qu'aucune application ne puisse accéder au dispositif 3 de sécurité sans utiliser le système 1 de sécurisation.

Le fonctionnement du système 1 de sécurisation est le suivant, figure 2.

Dans une étape préliminaire 20 d'authentification, par exemple lors de l'introduction du dispositif de sécurité, les moyens 8 d'authentification font présenter à l'utilisateur une fenêtre de demande de secret à saisir par l'utilisateur. A réception de ce secret, ils le font valider par le dispositif de sécurité, ce qui assure l'authentification de l'utilisateur. Ce résultat est stocké, à l'étape 22, dans les moyens 10 de stockage.

Dans une étape 24, une application effectue une requête auprès du dispositif de sécurité.

Cette requête est, par exemple, une requête d'authentification.

A l'étape 26, les moyens 14 comparent l'application avec la liste d'applications autorisées stockées dans les moyens 10 de stockage.

Si l'application fait partie de cette liste, les moyens 12 de validation vérifient à l'étape 28 que l'utilisateur a été authentifié en consultant les moyens 10 de stockage.

Si l'utilisateur est authentifié, les moyens 12 de validation autorisent, étape 30, l'application à accéder au dispositif de sécurité 3. Il est à noter que si la requête est une requête d'authentification, les moyens 12 de validation transmettent directement l'information à l'application de façon à ce qu'il ne soit pas demandé à l'utilisateur d'entrer son secret une nouvelle fois.

Si l'utilisateur ne s'est pas authentifié correctement, les moyens 12 de validation transmettent, étape 32, une réponse d'échec à l'application.

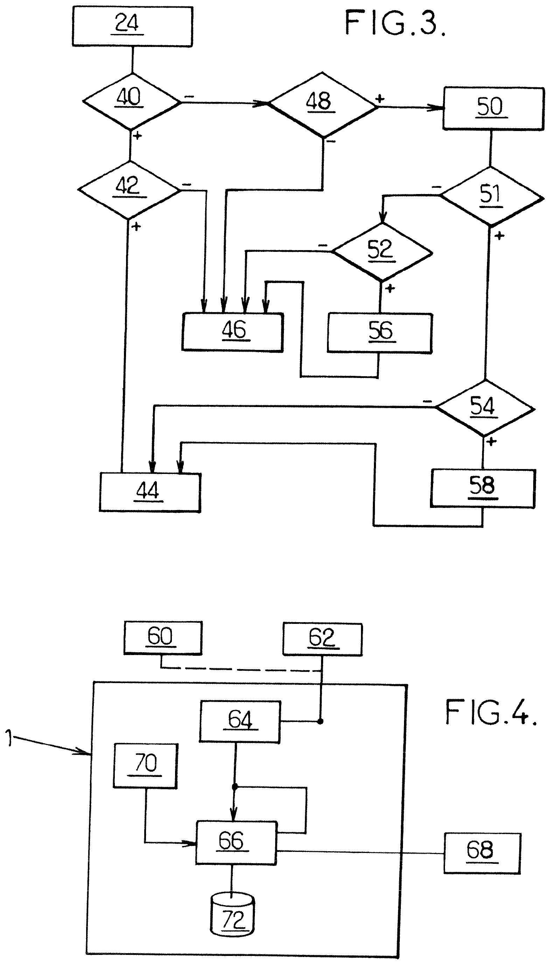

En référence à la figure 3, le mode de fonctionnement lorsque l'application ne fait pas partie de la liste des applications autorisées va être détaillé.

Après l'étape 24 de demande d'accès au dispositif de sécurité, le système vérifie, étape 40, que l'application lui est connue.

Si elle est connue, il vérifie, étape 42, qu'elle est autorisée et si la réponse est positive, il donne accès au dispositif de sécurité, à l'étape 44.

Par contre, si la réponse est négative, l'application est rejetée à l'étape 46.

Si l'application est inconnue, le système vérifie, à l'étape 48, sa politique par défaut. Typiquement cette politique par défaut est de deux types, soit elle consiste à refuser systématiquement l'accès à une application inconnue, et alors l'application est rejetée à l'étape 46 ; soit elle consiste à demander, étape 50, à l'utilisateur si l'utilisateur accepte, ou rejette, l'application, étape 51. Il choisit de le faire définitivement ou seulement pour la session en cours, étapes 52, 54.

Si la décision est définitive, celle-ci est stockée, étapes 56, 58, dans les moyens de stockage.

Puis, si l'application a été acceptée, le système donne accès au dispositif de sécurité, étape 44, et sinon il rejette l'application, étape 46.

Une architecture logicielle particulière permettant aux applications d'utiliser le système de sécurisation de façon transparente va maintenant être décrite en référence à la figure 4.

Cette architecture utilise des interfaces de programmation standardisées telles que la norme PKCS#11 et permet avantageusement d'évoluer vers un serveur cryptographique centralisé.

Dans cette architecture, les applications 60, 62 s'interfacent au module « client » 64 par la norme d'interface PKCS#11.

Le module « client » 64 communique avec un module « serveur » 66 chargé de la liaison avec le dispositif de sécurité 68.

Un module « gestion » 70 permet de configurer le module « serveur » 66. Ce dernier stocke ses paramètres de configuration ainsi que, par exemple, les résultats de l'authentification, dans un fichier 72.

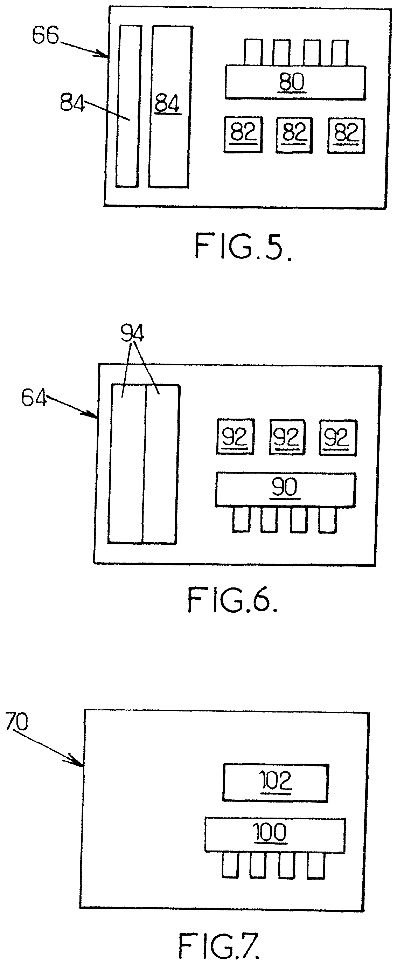

Le module « serveur » 66 est le composant central du système. Son architecture interne est décrite en référence à la figure 5.

Il comporte une couche de transport 80 capable de dialoguer selon des normes de transport de données telles que SSL, HTTP, pour intégrer le composant dans un large choix d'architectures et de produits.

Il supporte également plusieurs modèles 82 de programmation tels que PKCS#11, le « Microsoft Cryptographie Service Provider (HS CSP) », NGSCB ou autres.

Il comporte également des modules 84 d'audit et de sécurisation. Ce composant est responsable de demander à l'utilisateur le secret et de le protéger. Il ne communique jamais ce secret à d'autres composants ou applications. Il est également le seul composant à dialoguer avec le dispositif de sécurité.

Le module « serveur » 66 est également en charge de la configuration et est le seul autorisé à modifier les paramètres de configuration. Ainsi, il signe le fichier de configuration pour garantir son intégrité.

Le module « client » 64, figure 6, se présente sous la forme d'une bibliothèque dynamique qui assure l'interface avec l'application. Elle implémente une interface standardisée, telle que PKCS#11. Les applications 60, 62 utilisent le même protocole standardisé pour communiquer avec le module « client » 64. Il est à noter que le module « client » 64 peut implémenter plusieurs protocoles d'interface standardisés permettant ainsi à des applications diverses d'accéder au système de sécurisation.

Les applications 60, 62 font exécuter des opérations cryptographiques à travers l'interface normalisée proposée par le module « client » 64. Le module « client » 64 relaie alors les opérations demandées au module « serveur » 66 qui réalise les opérations avec l'aide du dispositif de sécurité.

Il est remarquable de noter que l'interface normalisée proposée par le module « client » 64 n'a pas besoin d'utiliser la même norme que le module « serveur » 66 avec le dispositif de sécurité.

Le module « client » 64 comporte donc une couche de transport 90 pour communiquer avec le module « serveur » 66 et différentes interfaces 92 pour communiquer avec les applications, ainsi que des fonctions 94 de sécurité et d'audit.

Le module « gestion » 70 comporte, figure 7, également une couche transport 100 et des interfaces 102 pour gérer l'interface utilisateur permettant de configurer et surveiller le système.

Il reçoit la configuration du module « serveur » 66 et lui retourne les modifications de configuration effectuées par l'utilisateur, ou l'administrateur.

Il est à noter que cette architecture modulaire permet avantageusement de répartir ces différents modules sur des calculateurs différents en utilisant des protocoles de transport sécurisés tels que SSL entre les différents modules. Pour des raisons de sécurité, seul le module « serveur » a besoin d'être situé au plus près du dispositif de sécurité.

On a ainsi décrit un système et un procédé d'authentification qui réalise une fonction de type SSO pour des applications utilisant des dispositifs de sécurité. Ainsi, cela améliore l'ergonomie de l'utilisateur en minimisant le nombre de fois où celui-ci doit entrer son secret.

Cela augmente également la sécurité en centralisant la gestion de secret dans un module de confiance et en interdisant sa divulgation à des applications qui pourraient être malveillantes.

On comprend que de nombreuses variantes sont possibles.

Par exemple, l'authentification de l'utilisateur peut s'effectuer lorsqu'une première application demande l'accès au dispositif de sécurité, ou bien lors de l'enfichage du dispositif de sécurité dans la station de travail.

De même, pour renforcer la sécurité, le système et le procédé d'authentification peuvent demander à l'utilisateur d'entrer son secret à des moments prédéterminés, par exemple, toutes les heures. Ces moments sont gérés et modifiés par l'administrateur du système.

A l'inverse, la vérification que l'application fait partie d'une liste d'applications autorisées peut être supprimée si l'environnement ou les conditions de sécurité sont réduites.

Dans une autre variante, le système comporte, figure 1, des moyens de surveillance 16 du dispositif de sécurité. Ces moyens 16 de surveillance empêchent toute application d'accéder au dispositif de sécurité sans passer par le système d'authentification.

Le stockage de l'authentification est également réalisable de différentes façons.

Dans un premier mode, le secret est stocké et chaque fois qu'une authentification est demandée par une application, le secret est présenté au dispositif de sécurité.

Dans un second mode, le résultat de l'authentification est stocké et présenté aux applications demandant une authentification.

Le procédé d'authentification est réalisable sous forme de logiciel, c'est-à-dire d'un produit programme d'ordinateur réalisant le procédé lorsqu'il est exécuté sur un ordinateur. Il peut être également réalisé sous forme de matériel, par exemple en codant un réseau de portes logiques de type FPGA, ou sous une forme mixte d'un boitier programmé tel que, par exemple, un terminal de paiement, cette dernière forme d'implémentation ayant l'avantage de fournir un environnement totalement contrôlable et donc de renforcer la sécurité de l'ensemble.

## Revendications

1. Système (1) de sécurisation d'au moins une application de traitement de données utilisant un dispositif de sécurité pour identifier un utilisateur, ledit système comportant :
- des premiers moyens (2) d'interface avec le dispositif (3) de sécurité ;
- des deuxièmes moyens (4) d'interface avec l'utilisateur ;
- des troisièmes moyens (6) d'interface avec ladite application adaptés pour intercepter toute requête d'utilisation dudit dispositif de sécurité en provenance de ladite application à destination dudit dispositif de sécurité ;
- des moyens (8) d'authentification connectés aux premiers et deuxièmes moyens d'interface, adaptés pour authentifier l'utilisateur comme utilisateur légitime du dispositif de sécurité par demande d'au moins un secret ;
- des moyens (10) de stockage du résultat de l'authentification ;
- des moyens (12) de validation connectés aux moyens de stockage et aux premiers et troisièmes moyens d'interface, adaptés pour :
∘ autoriser toute requête en provenance de l'application, à destination dudit dispositif de sécurité si et seulement si, l'utilisateur est authentifié ;
∘ transmettre directement une information à l'application de façon à ce qu'il ne soit pas demandé à l'utilisateur d'entrer son secret une nouvelle fois si l'utilisateur est déjà authentifié et qu'une requête reçue est une requête d'authentification de l'utilisateur,
∘ déclencher les moyens d'authentification si l'utilisateur n'est pas authentifié.

2. Système de sécurisation selon la revendication 1, **caractérisé en ce qu'**il comporte en outre des moyens de vérification de l'appartenance de ladite application à une liste d'applications autorisées préalablement stockée dans les moyens de stockage.

3. Système de sécurisation selon la revendication 2, **caractérisé en ce que**, si l'application n'appartient pas à la liste d'applications autorisées, les deuxièmes moyens d'interface sont adaptés pour demander l'accord de l'utilisateur pour que les moyens de validation autorisent l'application à communiquer avec ledit dispositif de sécurité.

4. Système de sécurisation selon l'une quelconque des revendications précédentes, **caractérisé en ce que** les moyens d'authentification sont adaptés pour demander une authentification à l'utilisateur selon une périodicité prédéterminée.

5. Système de sécurisation selon l'une quelconque des revendications précédentes, **caractérisé en ce qu'**il comporte en outre, des moyens de surveillance d'accès au dispositif de sécurité, adaptés pour détecter et bloquer toute tentative d'accès au dispositif de sécurité par une application sans utiliser les premiers et/ou les troisièmes moyens d'interface.

6. Procédé de sécurisation d'au moins une application utilisant un dispositif de sécurité pour identifier un utilisateur, ledit dispositif de sécurité authentifiant l'utilisateur au moyen d'au moins un secret, ledit procédé de sécurisation étant adapté pour recevoir et traiter des requêtes d'utilisation dudit dispositif de sécurité en provenance de ladite application, **caractérisé en ce qu'**il comporte les étapes de :
- interception (24) d'une requête d'utilisation adressée par ladite application audit dispositif de sécurité,
- vérification (28) que l'utilisateur a été authentifié par le dispositif de sécurité,
- si l'utilisateur n'est pas authentifié, rejet de la requête,
- si l'utilisateur a été authentifié, transmission (30) de la requête audit dispositif de sécurité et, si la requête reçue est une requête d'authentification de l'utilisateur, transmission directement d'une information à l'application de façon à ce qu'il ne soit pas demandé à l'utilisateur d'entrer son secret une nouvelle fois.

7. Procédé de sécurisation selon la revendication 6, **caractérisé en ce que**, suite à l'interception de la requête de l'application, une étape de vérification de l'appartenance de ladite application à une liste d'applications autorisées est effectuée, de sorte que seules les applications autorisées ont accès au dispositif de sécurité.

8. Procédé de sécurisation selon la revendication 7, **caractérisé en ce que**, si l'application n'appartient pas à la liste d'applications autorisées, il comporte une étape d'autorisation de ladite application par ledit utilisateur.

9. Procédé de sécurisation selon l'une des revendications 6 à 8, **caractérisé en ce que** ledit procédé de sécurisation est adapté pour recevoir et traiter des requêtes d'authentification de l'utilisateur.

10. Produit programme d'ordinateur comprenant des instructions de code de programme pour l'exécution des étapes du procédé selon les revendications 6 à 9 lorsque ledit programme est exécuté sur un ordinateur.

## Patentansprüche

1. Sicherungssystem (1) wenigstens einer Datenverarbeitungs-Anwendung, die eine Sicherheitsvorrichtung zum Identifizieren eines Nutzers verwendet, wobei das genannte System umfasst:
- erste Schnittstellenmittel (2) mit der Sicherheitsvorrichtung (3);
- zweite Schnittstellenmittel (4) mit dem Nutzer;
- dritte Schnittstellenmittel (6) mit der genannten Anwendung, die zum Abfangen jeder Nutzungsanforderung der genannten Sicherheitsvorrichtung geeignet sind, die von der genannten, für die genannte Sicherheitsvorrichtung bestimmten Anwendung stammt;
- Authentifizierungsmittel (8), die an die ersten und zweiten Schnittstellenmittel angeschlossen sind, die zum Authentifizieren des Nutzers als den berechtigten Nutzer der Sicherheitsvorkehrung per Anfrage wenigstens eines Geheimnisses geeignet sind;
- Speichermittel (10) des Ergebnisses der Authentifizierung;
- Validierungsmittel (12), die an die Speichermittel und die ersten und dritten Schnittstellenmittel angeschlossen sind, die geeignet sind, um
∘ jede aus der Anwendung stammende, für die genannte Sicherheitsvorrichtung bestimmte Anforderung zuzulassen, wenn und nur wenn der Nutzer authentifiziert ist;
∘ direkt eine Information an die Anwendung derart zu übertragen, dass nicht vom Nutzer verlangt wird, sein Geheimnis ein erneutes Mal einzugeben, wenn der Nutzer bereits authentifiziert ist und eine erhaltene Anforderung eine Authentifizierungsanforderung des Nutzers ist,
∘ Authentifizierungsmittel auszulösen, wenn der Nutzer nicht authentifiziert ist.

2. Sicherungssystem gemäß Anspruch 1, **dadurch gekennzeichnet, dass** es darüber hinaus Überprüfungsmittel der Zugehörigkeit der genannten Anwendung zu einer Liste von zugelassenen Anwendungen umfasst, die zuvor in den Speichermitteln gespeichert war.

3. Sicherungssystem gemäß Anspruch 2, **dadurch gekennzeichnet, dass**, wenn die Anwendung nicht zu der Liste von zugelassenen Anwendungen gehört, die zweiten Schnittstellenmittel geeignet sind, um das Einverständnis des Nutzers anzufragen, damit die Validierungsmittel der Anwendung erlauben, mit ihrer Sicherheitsvorrichtung zu kommunizieren.

4. Sicherheitssystem gemäß irgendeinem der voranstehenden Ansprüche, **dadurch gekennzeichnet, dass** die Authentifizierungsmittel geeignet sind, um eine Authentifizierung beim Nutzer gemäß einer vorbestimmten Periodizität anzufragen.

5. Sicherheitssystem gemäß irgendeinem der voranstehenden Ansprüche, **dadurch gekennzeichnet, dass** es darüber hinaus Zugangs-Überwachungsmittel zur Sicherheitsvorrichtung umfasst, die geeignet sind, um jeglichen Zugriffsversuch auf die Sicherheitsvorrichtung durch eine Anwendung zu erkennen und zu sperren, ohne die ersten und / oder die dritten Schnittstellenmittel zu verwenden.

6. Sicherungsverfahren wenigstens einer Anwendung, die eine Sicherheitsvorrichtung zum Identifizieren eines Nutzers verwendet, wobei die genannte Sicherheitsvorrichtung den Nutzer mittels wenigstens eines Geheimnisses authentifiziert, wobei das genannte Sicherungsverfahren geeignet ist, um Nutzungsanforderungen der genannten Sicherheitsvorrichtung zu empfangen und zu verarbeiten, die aus der genannten Anwendung stammen, **dadurch gekennzeichnet, dass** sie die folgenden Schritte umfasst:
- Abfangen (24) einer Nutzungsanforderung, die von der genannten Anwendung an die genannte Sicherheitsvorrichtung adressiert ist,
- Überprüfung (28), dass der Nutzer von der Sicherheitsvorrichtung authentifiziert wurde,
- wenn der Nutzer nicht authentifiziert ist, Ablehnen der Anforderung,
- wenn der Nutzer authentifiziert wurde, Übertragung (30) der Anforderung an die genannte Sicherheitsvorrichtung und wenn die empfangene Anforderung eine Authentifizierungsanforderung des Nutzers ist, direktes Übertragen einer Information auf die Anwendung derart, dass nicht vom Nutzer verlangt wird, sein Geheimnis ein erneutes Mal einzugeben.

7. Sicherungsverfahren gemäß Anspruch 6, **dadurch gekennzeichnet, dass** im Anschluss an das Abfangen der Anforderung der Anwendung ein Überprüfungsschritt der Zugehörigkeit der genannten Anwendung zu einer Liste von zugelassenen Anwendungen derart durchgeführt wird, dass nur die zugelassenen Anwendungen Zugriff auf die Sicherheitsvorrichtung haben.

8. Sicherungsverfahren gemäß Anspruch 7, **dadurch gekennzeichnet, dass**, wenn die Anwendung nicht zu der Liste von zugelassenen Anwendungen gehört, sie einen Zulassungsschritt der genannten Anwendung durch den genannten Nutzer umfasst.

9. Sicherungsverfahren gemäß einem der Ansprüche 6 bis 8, **dadurch gekennzeichnet, dass** das genannte Sicherungsverfahren geeignet ist, um Authentifizierungsanforderungen des Nutzers zu empfangen und zu verarbeiten.

10. Computerprogramm-Produkt, umfassend Programmcode-Anweisungen für die Ausführung der Schritte des Verfahrens gemäß den Ansprüchen 6 bis 9, wenn das genannte Programm auf einem Computer ausgeführt ist.

## Claims

1. System (1) for securing at least one data processing application using a security device in order to identify a user, said system comprising:
- first interfacing means (2) with the security device (3);
- second interfacing means (4) with the user;
- third interfacing means (6) with said application adapted to intercept any usage request of said security device originating from said application intended for said security device;
- authentication means (8) connected to the first and second interfacing means, adapted to authenticate the user as a legitimate user of the security device by requesting at least one secret;
- means (10) for storing the result of the authentication;
- validation means (12) connected to the storage means and to the first and third interfacing means, adapted to:
∘ authorise any request originating from the application, intended for said security device if and only if, the user is authenticated;
∘ directly transmit information to the application in such a way that the user is not asked to enter their secret again if the user is already authenticated and a received request is a request to authenticate the user,
∘ trigger the authentication means if the user is not authenticated.

2. Securing system according to claim 1, **characterised in that** it further comprises means for verifying the belonging of said application to a list of authorised applications stored beforehand in the storage means.

3. Securing system according to claim 2, **characterised in that**, if the application does not belong to the list of authorised applications, the second interfacing means are adapted to request approval from the user so that the validation means authorise the application to communicate with said security device.

4. Securing system according to any preceding claim, **characterised in that** the authentication means is adapted to request authentication from the user according to a predetermined periodicity.

5. Securing system according to any preceding claim, **characterised in that** it further comprises, a unit for monitoring the access to the security device, adapted to detect and block any attempt to access the security device by an application without using the first and/or third interfacing means.

6. Method for securing at least one application using a security device in order to identify a user, said security device authenticating the user by means of at least one secret, said method of securing being adapted to receive and process usage requests of said security device originating from said application, **characterised in that** it comprises the steps of:
- intercepting (24) a usage request sent by said application intended for said security device,
- verifying (28) that the user has been authenticated by the security device,
- if the user is not authenticated, rejecting the request,
- if the user has been authenticated, transmitting (30) the request to said security device and, if the request received is an authentication request of the user, directly transmitting information to the application in such a way that the user is not asked to enter their secret again.

7. Method for securing according to claim 6, **characterised in that**, following the intercepting of the request of the application, a step of verifying the belonging of said application to a list of authorised applications is carried out, in such a way that only the authorised applications have access to the security device.

8. Method for securing according to claim 7, **characterised in that**, if the application does not belong to the list of authorised applications, it comprises a step of authorising said application by said user.

9. Method for securing according to one of claims 6 to 8, **characterised in that** said method for securing is adapted to receive and to process authentication requests of the user.

10. Computer program product comprising program code instructions for executing steps of the method according to claims 6 to 9 when said program is executed on a computer.
